# EUROPÄISCHE PATENTSCHRIFT

(11) **EP 1 287 089 B1**
(45) Veröffentlichungstag und Bekanntmachung des Hinweises auf die Patenterteilung: **04.02.2004**
(21) Anmeldenummer: 01945226.7
(22) Anmeldetag: 31.05.2001
(51) Int. Cl.: C09K 5/10

(54) **WÄRMETRÄGER FÜR TIEFE TEMPERATUREN**
HEAT TRANSFER MEDIUM FOR LOW TEMPERATURES
CALOPORTEUR POUR BASSES TEMPERATURES

(30) Priorität: 31.05.2000 DE 10027137; 26.06.2000 DE 10031020
(43) Veröffentlichungstag der Anmeldung: 05.03.2003
(73) Patentinhaber: Linde AG, 65189 Wiesbaden (DE)
(72) Erfinder: PRALLER, Andreas, 82110 Germering (DE); REINHARDT, Hans-Jürgen, 87600 Kaufbeuren (DE)
(74) Vertreter: Gellner, Bernd, Dr.
(86) Internationale Anmeldenummer: PCT/EP2001/006205
(87) Internationale Veröffentlichungsnummer: WO 2001/092436

(56) Entgegenhaltungen:
- DE-A- 4 240 306
- DE-A- 19 853 571
- US-A- 3 324 670
- US-A- 3 516 935
- US-A- 4 474 924
- US-A- 5 117 648

## Beschreibung

Die Erfindung betrifft die Verwendung von 3-Methylpentan als Wärmeträger.

In der chemischen und pharmazeutischen Industrie werden häufig Verfahren durchgeführt, deren Temperatur in einem sehr weiten Temperaturbereich eingestellt werden muss. Die Temperierung des Apparates oder der Prozesseinheit erfolgt mittels einer Wärmeübertragungsanlage, die einen oder mehrere Kühl- bzw. Wärmekreisläufe enthält, in denen ein oder mehrere Wärmeträger geführt werden. Der Wärmeträger wird in einem Wärmeaustauscher entsprechend der gewünschten Prozesstemperatur abgekühlt und /oder in einem zweiten Wärmeaustauscher erwärmt und in einem den Apparat oder die Prozesseinheit enthaltenden Kreislauf umgepumpt

Als Wärmeträger werden in der Regel synthetische Öle verwendet Da der Schmelzpunkt der synthetischen Öle nicht niedrig genug ist - minimal -110°C - und die Viskosität der synthetischen Öle bei tiefen Temperaturen auf so hohe Werte ansteigt, dass diese nicht mehr umgepumpt werden können, sind synthetische Öle auf den Einsatzbereich oberhalb von etwa -95°C beschränkt

Aus der DE 42 40 306 C2 ist die Verwendung von Methylcyclopentan als Wärmeträger bekannt. Aufgrund des niedrigen Schmelzpunkts und der Tatsache, dass die Viskosität dieses Mediums bei tiefen Temperaturen nur geringfügig zunimmt, findet Methylcyclopentan im Temperaturbereich bis -130°C als Wärmeträger Verwendung.

Aufgabe vorliegender Erfindung ist es, einen Stoff zu finden, der auch bei tiefen Temperaturen als Wärmeträger eingesetzt werden kann und auch bei hohen Temperaturen noch flüssig ist.

Diese Aufgabe wird erfindungsgemäß dadurch gelöst, dass 3-Methylpentan bei einer Temperatur zwischen -150 °C und + 120°C als Wärmeträger verwendet wird.

Es hat sich überraschenderweise gezeigt, dass 3-Methylpentan hervorragende Wärmeträgereigenschaften besitzet. 3-Methylpentan ist aufgrund seines Schmelz- und Siedepunkts und seiner auch in der Nähe des Schmelzpunktes niedrigen Viskosität in einem weiten Temperaturbereich als Wärmeträger einsetzbar. Zudem besitzt 3-Methylpentan eine relativ hohe spezifische Wärmekapazität, so dass zur Übertragung einer vorgegebenen Wärmeleistung ein relativ geringer Wärmeträgerfluss eingestellt werden muss.

Bisher war es nötig, mehrere Wärmeträger zu verwenden, wenn die Temperatur in einem großen Temperaturbereich variiert werden musste. Mit Hilfe von 3-Methylpentan ist es nunmehr möglich, einen Temperaturbereich zwischen etwa -150°C und über 100°C mit einem einzigen Wärmeträger abzudecken.

3-Methylpentan besitzt bei -110°C eine Viskosität, die um einen Faktor 2 bis 4 unterhalb der Viskosität von Methylcyclopentan liegt.

Der erfindungsgemäße Wärmeträger ist zum einen bei Temperaturen zwischen -50°C und -130°C aufgrund seiner geringen Zähigkeit leichter umpumpbar als die bekannten Wärmeträger, zum anderen ist er in dem Temperaturbereich unterhalb von -130°C einsetzbar, in dem bisher keine als Wärmeträger geeignete Medien bekannt waren.

3-Methylpentan ist in einem großen Temperaturbereich zwischen etwa -150°C und +120°C und unter Einsatz besonderer Maßnahmen auch noch über +120°C einsetzbar. Die besonderen Vorteile der Erfindung, nämlich die geringe Viskosität und der niedrige Schmelzpunkt von 3-Methylpentan, zeigen sich aber insbesondere bei tiefen Temperaturen zwischen -150°C und -100°C.

Jedoch auch bei höheren Temperaturen beispielsweise bis 120°C und darüber eignet sich 3-Methylpentan hervorragend als Wärmeträger. Vorzugsweise wird die durch den Siedepunkt vorgegebene obere Temperaturgrenze durch Beaufschlagung des Wärmeträgers mit einem Druck zwischen 1 bar und 5 bar, vorzugsweise zwischen 1,5 bar und 3,5 bar, verschoben. Auf diese Weise können der Siedepunkt des Wärmeträgers und damit dessen Einsatzbereich auf Temperaturen von 120°C und mehr erweitert werden.

In der Praxis wird 3-Methylpentan nicht bis an die durch den Schmelzpunkt bestimmte untere Temperaturgrenze abgekühlt, um ein teilweises oder vollständiges Ausfrieren der Kohlenwasserstoffe zu vermeiden. Vorzugsweise wird der Kohlenwasserstoff bei einer Temperatur oberhalb von 10 K, bevorzugt 15 K, über seinem Schmelzpunkt verwendet. Bei diesen Temperaturen ist eine Verfestigung des Kohlenwasserstoffes ausgeschlossen, die einen Ausfall der Wärmeübertragungsanlage nach sich ziehen würde.

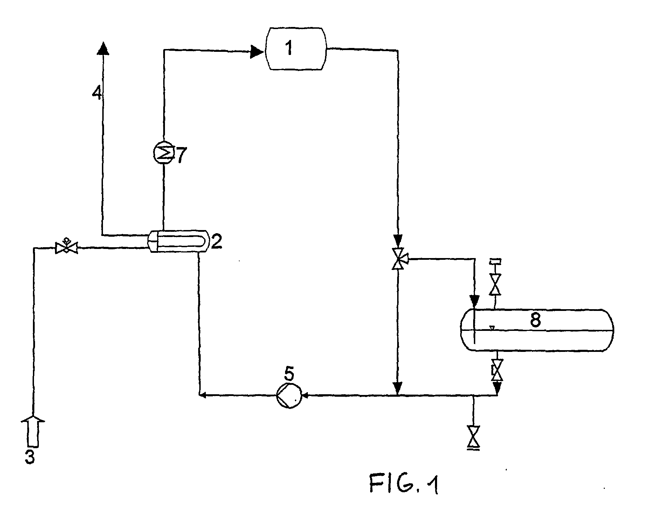

Die Erfindung sowie weitere Einzelheiten der Erfindung werden im folgenden anhand von dem in der Zeichnung dargestellten Ausführungsbeispiel näher erläutert. Hierbei zeigt die:
- Figur: eine Wärmeübertragungsanlage zur Temperierung eines chemischen Reaktors.

In einem Reaktor 1 werden chemische Reaktionen durchgeführt, die es erforderlich machen, in dem Reaktor 1 Temperaturen zwischen -120°C und +100°C einzustellen. Hierzu wird der Reaktor 1 mit Hilfe eines im Kreislauf geführten Wärmeträgers temperiert. Als Wärmeträger wird 3-Methylpentan verwendet.

Zur Erzielung tiefer Temperaturen wird das 3-Methylpentan in einem Wärmetauscher 2 gegen flüssigen Stickstoff 3 abgekühlt Der verdampfende Stickstoff wird über Leitung 4 abgezogen. Das abgekühlte 3-Methylpentan kühlt in indirektem Wärmeaustausch den Reaktor 1 ab. Der erwärmte Wärmeträger wird dann mit der Pumpe 5 zum Wärmetauscher 2 zurückgepumpt und wieder abgekühlt Die Temperatur des Reaktors 1 wird über die Temperatur des Wärmeträgers nach dem Wärmetauscher 2 geregelt.

Zur Erwärmung des Reaktors 1 auf Temperaturen bis 100°C ist in den Kreislauf ein zweiter Wärmetauscher 7 geschaltet, in dem das 3-Methylpentan erhitzt wird. Aufgrund des sehr breiten Temperaturbereichs von mehr als 200 K, der von dem Wärmeträger durchfahren wird, ist es notwendig, an den Wärmeträgerkreislauf einen Expansionsbehälter 8 anzuschließen, um die mit der Temperaturänderung einhergehende Volumenänderung des Wärmeträgers auszugleichen.

## Patentansprüche

1. Verfahren zur Temperierung eines Reaktors für chemische Reaktionen, wobei in dem Reaktor Temperaturen zwischen -120 °C und + 100 °C eingestellt werden, **dadurch gekennzeichnet, dass** 3-Methylpentan als Wärmeträger verwendet wird.

2. Verfahren nach Anspruch 1, **dadurch gekennzeichnet, dass** 3-Methylpentan unter einem Druck zwischen 1 bar und 5 bar, vorzugsweise zwischen 1,5 bar und 3,5 bar, verwendet wird.

3. Verfahren nach einem der Ansprüche 1 oder 2, **dadurch gekennzeichnet, dass** 3-Methylpentan bei einer Temperatur oberhalb von 10 K, bevorzugt 15 K, über seinem Schmelzpunkt verwendet wird.

## Claims

1. Method for controlling the temperature of a reactor for chemical reactions, in which temperatures of between -120°C and +100°C are set in the reactor, **characterized in that** 3-methylpentane is used as heat-transfer medium.

2. Method according to Claim 1, **characterized in that** 3-methylpentane is used at a pressure of between 1 bar and 5 bar, preferably between 1.5 bar and 3.5 bar.

3. Method according to one of Claims 1 or 2, **characterized in that** 3-methylpentane is used at a temperature which is over 10 K, preferably 15 K, above its melting point.

## Revendications

1. Procédé de thermorégulation d'un réacteur pour des réactions chimiques, dans lequel des températures comprises entre - 120°C et + 100°C sont établies dans le réacteur, **caractérisé en ce que** le 3-méthylpentane est utilisé en tant que caloporteur.

2. Procédé selon la revendication 1, **caractérisé en ce que** le 3-méthylpentane est utilisé sous une pression comprise entre 1 bar et 5 bar, de préférence entre 1,5 bar et 3,5 bar.

3. Procédé selon l'une quelconque des revendications 1 ou 2, **caractérisé en ce que** le 3-méthylpentane est utilisé à une température supérieure de 10 K, de préférence 15 K à son point de fusion.
